# EUROPÄISCHE PATENTSCHRIFT

(11) **EP 0 379 031 B1**
(45) Veröffentlichungstag und Bekanntmachung des Hinweises auf die Patenterteilung: **13.04.1994**
(21) Anmeldenummer: 90100336.8
(22) Anmeldetag: 09.01.1990
(51) Int. Cl.: B60R 9/055

(54) **Dachkoffer für Kraftfahrzeuge**
Roof luggage case for motor vehicles
Coffre de toit pour véhicule

(30) Priorität: 10.01.1989 DE 3900455
(43) Veröffentlichungstag der Anmeldung: 25.07.1990
(73) Patentinhaber: JETBAG GMBH, D-92318 Neumarkt (DE)
(72) Erfinder: Uebach, Horst, 8431 Sengenthal (DE); Deisenhofer, Siegfried, 8801 Herrieden (DE)
(74) Vertreter: Matschkur, Götz, Lindner Patent- und Rechtsanwälte

(56) Entgegenhaltungen:
- BE-A- 648 303
- DE-U- 8 434 769
- FR-A- 2 453 043
- FR-A- 2 520 468
- FR-A- 2 521 931
- GB-A- 691 720
- US-A- 3 002 783
- US-A- 3 095 129

## Beschreibung

Die Erfindung bezieht sich auf einen Dachkoffer für Kraftfahrzeuge mit einem an einer seiner Schmalseiten schwenkbar am schalenförmigen Unterteil angelenkten, vorzugsweise ebenfalls schalenförmigen Deckel, der in seiner Schließstellung durch mehrere an einer längsverschiebbaren Schließstange angeordnete, in ortsfeste Gegenschließteile eingreifende Schließriegel verriegelbar ist, wobei bevorzugt der Deckel an beiden Längsseiten durch mehrere beabstandete Riegel mit dem Unterteil verbindbar ist und die Schließstangen an den beiden Längsseiten über Umlenkeinrichtungen mit einer gemeinsamen Betätigungsvorrichtung verbunden sind.

Diese Ausbildung eines Dachkoffers - wie sie in der nicht vorveröffentlichten Deutschen Patentschrift DE 38 29 485 C2 beschrieben ist - hat gegenüber der üblichen Anlenkung des Deckels an einer der beiden Längsseiten - man vergl. hierzu beispielsweise DE-U-8 434 769 - den Vorteil, daß ein in gleicher Weise einfaches Be- und Entladen des Dachkoffers von beiden Seiten des Kraftfahrzeugs aus möglich ist. Dies ist beispielsweise im Hinblick auf die mögliche Blockierung einer der Längsseiten durch ein sehr eng daneben parkendes anderes Fahrzeug von ganz erheblicher Bedeutung. Darüber hinaus braucht man etwaige schwere im Dachkoffer untergebrachte Teile nicht über das ganze Fahrzeug freitragend herüberheben, sondern kann sie jeweils von der nähergelegenen Seite aus herausnehmen.

Gegenüber der üblichen Anlenkung entlang einer der Längsseiten hat die Anlenkung des Deckels an einer Schmalseite jedoch den Nachteil, daß die Verbindung und das Aufschwenken wesentlich labiler sind und nicht die gleiche Verwindungssteifigkeit gegeben ist. Insbesondere gilt dies im Falle stirnseitig abgerundeter Dachkoffer, in denen noch nicht einmal der Dachkofferbreite entsprechend beabstandete Scharniere ohne weiteres vorgesehen werden können.

Der Erfindung liegt daher die Aufgabe zugrunde, einen Dachkoffer der eingangs genannten Art so auszugestalten, daß er bei einfachem Aufbau leicht öffenbar und schließbar ist, wobei die Gefahr einer Verwindung und daraus resultierend einer Beschädigung des Koffers beim Öffnen und Schließen selbst bei einseitiger Zugbelastung ausgeschlossen ist.

Zur Lösung dieser Aufgabe ist erfindungsgemäß vorgesehen, daß der, vorzugsweise an der Anlenk-Schmalseite gerundete und über ein schmales mittiges Gelenkscharnier am Unterteil angelenkte Deckel durch im Bereich der Ecken seiner Öffnungsschmalseite angreifende, Gasfedern umfassende Stabilisierungsstreben in Öffnungsrichtung gegenüber dem Unterteil vorgespannt ist.

Durch die erfindungsgemäßen Stabilisierungsstreben, die durch Gasfedern auseinandergespreizt werden, ist nicht nur das Öffnen des Dachkoffers sehr einfach möglich, indem lediglich der Schließriegel geöffnet werden muß, so daß der Deckel sich dann unter der Wirkung der Federn automatisch öffnet. Gleichzeitig ist auf diese Art und Weise auch der Gefahr einer Verwindung entgegengewirkt, die speziell bei einem schmalen mittigen Gelenk bei gerundeten Dachkoffern ansonsten unvermeidlich in Kauf genommen werden müßte.

Bei der bevorzugten Rundung von Unterteil und Deckel im Bereich der Anlenk-Schmalseiten können die Scharnierteile bevorzugt an einem einen Großteil der Anlenk-Schmalseiten übergreifenden Versteifungseinlagen befestigt sein, beispielsweise an den Innenseiten der Ränder befestigten gebogenen Rohrteilen. Bei der bevorzugten Herstellung solcher Dachkoffer als Tiefziehteile aus Kunststoff kommt eine direkte Anlenkung jedenfalls bei nur einem schmalen Gelenkbeschlagteil schon wegen der Gefahr des Ausbrechens der Kunststoffwände ja ersichtlich nicht in Betracht.

Neben der Möglichkeit, zwei an den Schmalseiten angelenkte sich kreuzende Gasfedern vorzusehen, wodurch allerdings eine direkte Belademöglichkeit von der einen Längsseite her stark erschwert ist, hat es sich in Ausgestaltung der Erfindung als besonders zweckmäßig erwiesen, an den Öffnungsschmalseiten von Deckel und Unterteil zwei seitliche sich eng neben die Längsseiten einfaltende Knickarme anzulenken, deren Schenkel durch eine jeweils das Gelenk übergreifende Gasfeder miteinander verbunden sind.

In einer ersten Ausführungsform soll dabei die Gasfeder außenliegend im wesentlichen parallel zu einem, vorzugsweise dem am Unterteil angelenkten, Schenkel verlaufend am anderen Schenkel nahe des Gelenks angreifen. Dadurch ist der Gesamtverstellweg der Gasfeder zwischen der Öffnungs- und Schließstellung nicht allzu groß, was baulich wesentlich einfacher realisierbar ist.

In einer zweiten Variante der erfindungsgemäßen Gasfedervorspannung der Knickarme kann die Gasfeder in einen der als Hohlschenkel ausgebildeten Schenkel eingebaut sein und über einen das Gelenk innen durchsetzenden Seilzug am Gegenschenkel angreifen.

Gemäß einer besonders vorteilhaften Weiterbildung der vorliegenden Erfindung kann darüber hinaus vorgesehen sein, daß die Schenkel der Knickarme durch parallel zu den Schmalseitenkanten verlaufende drehbar gelagerte Verbindungsstreben getrieblich miteinander verbunden sind, wobei bevorzugt die Schenkel und ihre Verbindungsstreben jeweils als U-förmige Rohrbiegeteile ausgebildet sein können. Durch diese getriebliche Verbindung führt das einseitige Angreifen am Deckel zum Schließen oder Öffnen nicht zu einer Verwindung, da trotz der in der Praxis stets seitlichen Belastung beim Schließen des Deckels über die getriebliche Verbindung in gleicher Weise eine Kraftbeaufschlagung auf der Gegenseite stattfindet, so daß - was insbesondere bei den bereits angesprochenen nur mittigen schmalen Gelenkbeschlagteilen von Bedeutung ist - der Dachkoffer problemlos öffnet und schließt.

Die vorstehende Anlenk-Öffnungs- und Schließmechanik ermöglicht nicht nur eine vielseitigere Formgestaltung der Koffer - insbesondere die bereits angesprochene windschlüpfrigere und auch aus ästhetischen Gründen vielfach angestrebte Rundung an dem darüber hinaus meist auch noch in der Höhe erniedrigten Anlenk-Schmalseite. Darüber hinaus läßt sich, sowohl was die äußere Ästhetik anlangt, als auch im Hinblick auf den angestrebten niedrigeren Luftwiderstandsbeiwert, ein Dachkoffer auch noch dadurch weiter verbessern, daß das Unterteil - im Gegensatz zu den bisherigen stets nach außen abgewinkelten Randflansch - einen L-förmigen einwärts gewinkelten Randflansch aufweist, der Dichtungselemente für den stumpf aufsetzenden mit seinen Seitenflächen fluchtenden zu denen des Unterteils verlaufenden Deckel trägt.

Im Gegensatz zu den bislang bekannten Dachkoffern ergibt sich somit ein in seiner Außenkontur völlig glatter Koffer, bei dem auch das nutzbare Innenvolumen im Verhältnis zur Gesamtaußenbreite nicht unbeträchtlich vergrößert ist.

Die Dichtungselemente können dabei bevorzugt einen sich zwischen dem Deckelrand und dem aufwärtsgerichteten Schenkel des Randflansches des Unterteils verklemmenden Dichtungsschlauch, vorzugsweise aus Neopren, umfassen, wobei darüber hinaus auf den Deckelrand und den aufwärtsgerichteten Schenkel des Randflansches in an sich bekannter Weise U-förmige Einfassungsstreifen aufgesetzt sein können. Im Falle des Einfaßstreifens des Deckelrandes läßt sich dieser durch farbliche Absetzung sehr einfach und wirkungsvoll als Zierstreifen ausbilden. Dabei liegt es auch im Rahmen der Erfindung, den Einfassungsstreifen in seiner Höhe keilförmig auszubilden, so daß sich entsprechend ein keilförmiger Zierstreifen auf der Außenseite ergibt.

Schließlich liegt es auch noch im Rahmen der Erfindung, unter den Längs-Randflanschen die Schließstange tragende Versteifungsprofile anzuordnen.

Weitere Vorteile, Merkmale und Einzelheiten der Erfindung ergeben sich aus der nachfolgenden Beschreibung einiger Ausführungsbeispiele sowie anhand der Zeichnung. Dabei zeigen;
- Fig. 1: eine Aufsicht auf ein Kraftfahrzeug mit einem darauf angeordneten, an der Anlenkschmalseite abgerundeten Dachkoffer,
- Fig. 2: einen vergrößerten Teilschnitt längs der Linie II-II in Fig. 1,
- Fig. 3: eine Ansicht des Dachkoffers alleine in Öffnungsstellung,
- Fig. 4: eine schematische Stirnansicht eines geöffneten abgewandelten Dachkoffers mit anderer Ausbildung der Stabilisierungsstreben, und
- Fig. 5: einen Teilschnitt entsprechend Fig. 2 durch eine abgewandelte Ausführungsform.

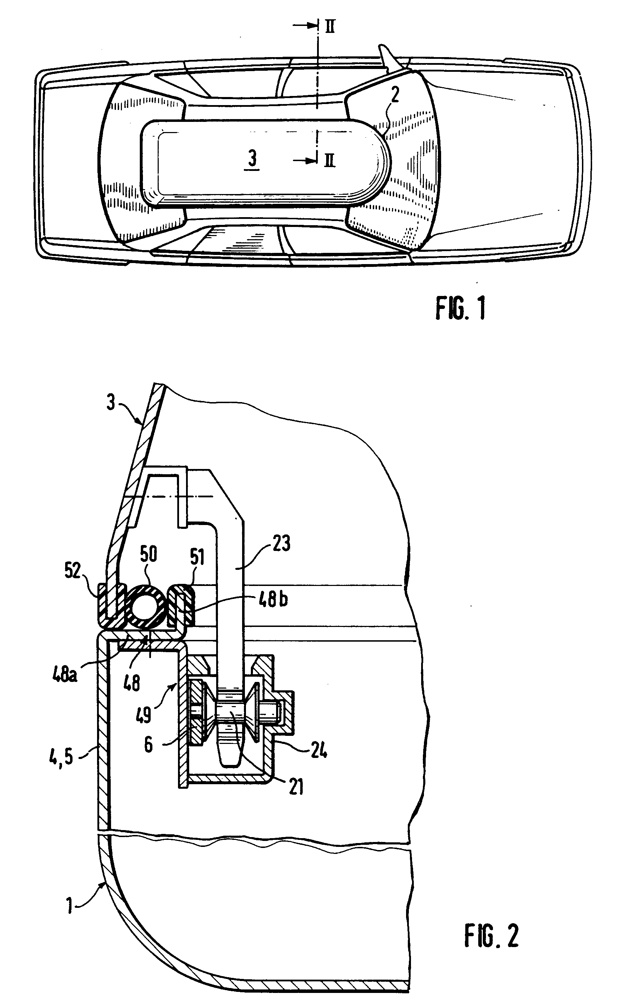

Der in den Figuren 1 bis 3 gezeigte Dachkoffer besteht aus einem schalenförmigen Unterteil 1 und einem längs der Anlenkschmalseite 2 daran angelenkten ebenfalls schalenförmigen Deckel 3. Der Dachkoffer ist dabei in üblicher Weise mit Hilfe von Trägerbügeln auf einem Kraftfahrzeugdach befestigbar. Diese Bauteile sind aber hinlänglich bekannt und deshalb der Übersichtlichkeit halber in den Zeichnungen gar nicht mit dargestellt. Durch die Anlenkung an der Schmalseite ist beim Öffnen des Dachkoffers das Unterteil von beiden Längsseiten, d.h. von beiden Seiten des Kraftfahrzeugs aus, zugänglich, so daß ein einfacheres rascheres Beund Entladen möglich ist. Bei dem dargestellten Dachkoffer mit längs der Anlenk-Schmalseite 2 gerundeter Ausbildung ist lediglich ein schmales mittiges Gelenkscharnier 40 vorgesehen, welches sowohl am Unterteil 1 als auch am Deckel 3 mit Hilfe von zumindest einen Großteil der Anlenk-Schmalseiten übergreifenden Versteifungseinlagen 41 befestigt ist.

Die dadurch bewirkte sehr labile punktförmige Anlenkung wird kompensiert durch eine die erfindungsgemäßen Stabilisierungsstreben, die im Ausführungsbeispiel nach den Figuren 1 bis 3 seitliche Knickarme 42 und 43 mit die Gelenke 44 überbrückenden Gasfedern 45 darstellen, wobei die Schenkel 42a und 43a sowie 42b und 43b der Knickarme 42, 43 jeweils durch Verbindungsstreben 46 miteinander verbunden sind, die drehbar parallel zu den Schmalkanten von Unterteil 1 und Deckel 3 an diesen Bauteilen gelagert sind, so daß jeder einseitige Schließdruck auf eine Ecke des Deckels nicht zu einer Verwindung führen kann, sondern umgelenkt auch auf die andere Kante direkt übertragen wird.

Die längs der beiden Längsseiten des Deckels 3 angeordneten Riegel 23 wirken mit durch die Abdeckungen 24 verdeckten, in die Ausschnitte der Riegel 23 eingreifenden Rollen zusammen, welche durch die beidseitig am Unterteil 1 längsverschiebbar gelagerten Schließstangen 6 und 7 in die Einschnitte der Riegel 23 hinein und wieder herausbewegt werden können. Die Schließstangen 6, 7 sind dabei durch eine nicht dargestellte getriebliche Verbindung miteinander gekopppelt, so daß mit einem Handgriff beide Schließstangen gleichzeitig betätigt werden können. Derartige gekoppelte Schließstangen sind Gegenstand einer älteren Patentanmeldung.

Beim Ausführungsbeispiel nach den Figuren 1 bis 3 sind die Gasfedern 45 außenliegend so angeordnet, daß sie im wesentlichen parallel zu den Schenkeln 42b und 43b verlaufen, d.h. der Anlenkpunkt an diesen Schenkeln wesentlich weiter vom Gelenk 44 entfernt ist, als der zweite Anlenkpunkt 47 an den Schenkeln 42a und 43a des Deckels 3. Dadurch sind die Längsunterschiede der Gasfedern zwischen der Öffnungs- und Schließstellung nicht allzu groß, wobei ein sehr einfacher Ausgleich über die Stärke der Gasfedern erzielt werden kann.

Aus Fig. 2 erkennt man, daß - im Gegensatz zu den bisher üblichen Ausbildungen der Unterteile, bei denen der Randflansch nach außen und unten abgewinkelt war (DE 38 29 485 C2, Fig. 7) - der Randflansch 48 nach innen oben abgewinkelt ist, d.h. einen nach einwärts gewinkelten Schenkel 48a und einen nach oben gerichteten Schenkel 48b umfaßt. Der Randflansch trägt auf der Unterseite eine L-förmige Versteifungsstrebe 49, die ihrerseits die Schließstangen und die Rollen 21 für die Riegel 23 trägt. Der Deckel 3 ist so ausgebildet, daß seine Seitenflächen im wesentlichen fluchtend mit den Seitenflächen 4, 5 des Unterteils 1 verlaufen, wobei die Kante des Deckels stumpf auf dem nach einwärts gerichteten Randflansch 48 aufsitzt. Bei den üblichen bisherigen Dachkoffern mit nach außen gewinkelten Randflanschen übergreift der Deckel seitlich den Randflansch. Diese bekannte Ausbildung hat zum einen zur Folge, daß von der Gesamtbreite des Koffers nur der innere Teil abzüglich der beiden Randflanschbreiten überhaupt ausnutzbar ist, während bei der erfindungsgemäßen Konstruktion der gesamte Innenraum ausnutzbarr ist. Darüber hinaus ergibt sich durch die erfindungsgemäße Ausgestaltung eine völlig geschlossene optisch gefälligere und auch einen günstigeren Luftwiderstandsbeiwert aufweisende glatte Außenfläche.

Die Abdichtung zwischen Deckel und Unterteil wird durch einen auf den Schenkel 48a vorzugsweise aufvulkanisierten Neoprenschlauch 50 bewirkt, der zwischen dem aufwärtsgerichteten Flansch 48b und dem Deckelrand verklemmt wird. Auf den Deckelrand und den nach aufwärts gerichteten Schenkel 48 b sind dabei in an sich bekannter Weise U-förmige Einfassungfsstreifen 51 und 52 aufgesetzt, wobei besonders der Streifen 52 durch farbliche Absetzung und ggf. durch unterschiedliche Höhenausbildung, so daß er von einem Ende des Koffers zum anderen sich verbreitert, gleichzeitig zur Ausbildung eines Zierstreifens herangezogen werden kann.

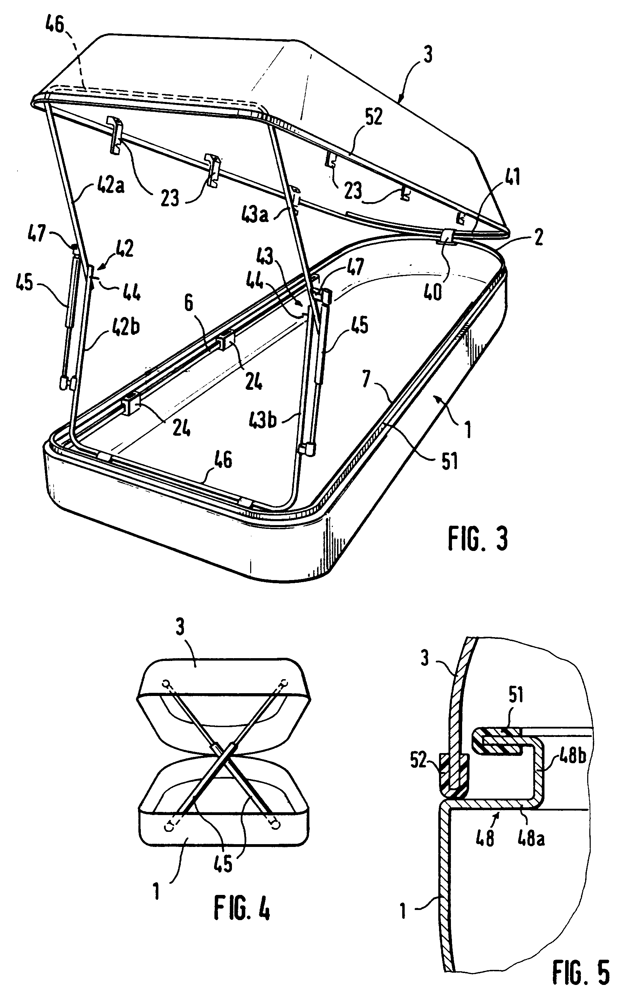

In Fig. 4 ist schematisch eine abgewandelte Ausführungsform eines erfindungsgemäßen Dachkoffers dargestellt, bei dem die Stabilisierungsstreben zwei an den Schmalseiten angelenkte sich kreuzende Gasfedern sind, die bevorzugt im Kreuzungspunkt zu einer Schere verbunden sein können.

Die Erfindung ist nicht auf das dargestellte Ausführungsbeispiel beschränkt. So wäre es beispielsweise auch möglich, an den nach oben gewinkelten Schenkel 48b noch einen waagrecht nach außen abgewinkelten Schenkelabschnitt anzuformen, wobei dann selbstverständlich der Einfassungsstreifen 51 auf diesen waagrecht nach außen weisenden Schenkelabschnitt aufgesetzt werden müßte. Bei dieser Ausgestaltung könnte der Dichtschlauch 50 völlig weggelassen werden, da - wie umfangreiche Versuche gezeigt haben - etwa unter dem Einfassungsstreifen 52 eindringendes Wasser beim Hochsteigen längs des Schenkels 48b spätestens bei Erreichen des waagrechten Schenkelabschnitts abgehalten würde, so daß es in jedem Fall nicht in das Innere des Koffers eindringen kann (Fig. 5).

## Patentansprüche

1. Dachkoffer für Kraftfahrzeuge mit einem an einer seiner Schmalseiten schwenkbar am schalenförmigen Unterteil (1) angelenkten, ebenfalls schalenförmigen Deckel (3), der in seiner Schließstellung durch mehrere an einer längsverschiebbaren Schließstange (6, 7) angeordnete, in ortsfeste Gegenschließteile eingreifende Schließ-Riegel (23) verriegelbar ist, wobei der Deckel (3) an beiden Längsseiten durch mehrere beabstandete Riegel (23) mit dem Unterteil (1) verbindbar ist und die Schließstangen (6, 7) an den beiden Längsseiten über Umlenkeinrichtungen mit einer gemeinsamen Betätigungsvorrichtung verbunden sind, dadurch gekennzeichnet, daß der an der Anlenk-Schmalseite (2) gerundete und über ein schmales mittiges Gelenkscharnier (40) am Unterteil 1 angelenkte Deckel (3) durch im Bereich der Ecken seiner Öffnungsschmalseite angreifende, Gasfedern (45) umfassende Stabilisierungsstreben in Öffnungsrichtung gegenüber dem Unterteil (1) vorgespannt ist.

2. Dachkoffer nach Anspruch 1, gekennzeichnet durch zwei an den Schmalseiten angelenkte sich kreuzende Gasfedern.

3. Dachkoffer nach Anspruch 1, dadurch gekennzeichnet, daß an den Öffnungsschmalseiten von Deckel (3) und Unterteil (1) zwei seitliche, sich eng neben die Längsseiten einfaltende Knickarme (42, 43) angreifen, deren Schenkel (42a, 42b; 43a, 43b) durch eine jeweils das Gelenk (44) übergreifende Gasfeder (45) verbunden sind.

4. Dachkoffer nach Anspruch 3, dadurch gekennzeichnet, daß die Gasfeder (45) im wesentlichen parallel zu einem, vorzugsweise dem am Unterteil (3) angelenkten, Schenkel (42b, 43b) verlaufend am anderen Schenkel (42a, 43a) nahe dem Gelenk (44) angreift.

5. Dachkoffer nach Anspruch 1, dadurch gekennzeichnet, daß die Gasfeder in einen der als Hohlschenkel ausgebildeten Schenkel eingebaut und über einen das Gelenk innen durchsetzenden Seilzug am Gegenschenkel angreift.

6. Dachkoffer nach einem der Ansprüche 3 bis 5, dadurch gekennzeichnet, daß die Schenkel der Knickarme (42, 43) durch parallel zu den Schmalseitenkanten verlaufende, drehbar gelagerte Verbindungsstreben (46) getrieblich miteinander verbunden sind.

7. Dachkoffer nach Anspruch 6, dadurch gekennzeichnet, daß die Schenkel (42a, 43a; 42b, 43b) und ihre Verbindungsstreben (46) jeweils als U-förmige Rohrbiegeteile ausgebildet sind.

8. Dachkoffer nach einem der Ansprüche 1 bis 7, dadurch gekennzeichnet, daß die Scharnierteile an einen Großteil der Anlenk-Schmalseiten (2) übergreifenden Versteifungseinlagen (41) befestigt sind.

9. Dachkoffer nach einem der Ansprüche 1 bis 8, dadurch gekennzeichnet, daß das Unterteil einen L-förmigen einwärtsgewinkelten Randflansch (48) aufweist, der Dichtungselemente (50) für den stumpf aufsetzenden, mit seinen Seitenflächen fluchtend zu denen des Unterteils (1) verlaufenden Deckel (3) trägt.

10. Dachkoffer nach Anspruch 9, dadurch gekennzeichnet, daß die Dichtungselemente einen sich zwischen dem Deckelrand und dem aufwärtsgerichteten Schenkel (48b) des Randflansches (48) des Unterteils (1) verklemmenden Dichtungsschlauch (50) umfassen.

11. Dachkoffer nach Anspruch 10, dadurch gekennzeichnet, daß der Dichtungsschlauch aus Neopren besteht .

12. Dachkoffer nach Anspruch 10 oder 11, dadurch gekennzeichnet, daß der Dichtungsschlauch (50) aufvulkanisiert ist.

13. Dachkoffer nach einem der Ansprüche 9 bis 14, gekennzeichnet durch auf den Deckelrand und den aufwärtsgerichteten Schenkel (48b) des Randflansches (48) aufgesetzte U-förmige Einfassungsstreifen (52, 51).

14. Dachkoffer nach einem der Ansprüche 9 bis 13, dadurch gekennzeichnet, daß unter den Längs-Randflanschen (48) die Schließstangen (6, 7) tragende Versteifungsprofile (49) angeordnet sind.

15. Dachkoffer nach einem der Ansprüche 1 bis 8, 13, 14, dadurch gekennzeichnet, daß das Unterteil einen C-förmigen einwärtsgewinkelten Randflansch (48) mit einem am nach oben gerichteten Mittelschenkel angeformten freien, verkürzten, nach außen zurückgebogenen im wesentlichen horizontalen Schenkelabschnitt aufweist, auf dessen horizontalen unteren Schenkel der Deckel (3) mit zu den Seitenwänden des Unterteils fluchtenden Seitenwänden stumpf aufsetzt.

## Claims

1. Roof case for motor vehicles, having a lid (3) in the form of a shell pivotably attached by one of its short sides to the lower part (1), which is also in the form of a shell, the lid being lockable in its closed position by a plurality of closing bolts (23) disposed on a longitudinally displaceable closing bar (6, 7) and engaging in fixed corresponding parts, the lid (3) being connectable to the lower part (1) along its two long sides by a plurality of spaced bolts (23), and the closing bars (6, 7) being connected to a common actuator at the two longer sides via deflectors, characterised in that the lid (3), which is rounded at the short, attached, side (2) and is attached to the lower part (1) via a narrow central hinge (40), is biased in the opening direction relative to the lower part (1) by stabilising struts acting in the region of the corners of its short, opening side and comprising pneumatic springs (45).

2. Roof case according to claim 1, characterised by two intersecting pneumatic springs attached to the short sides.

3. Roof case according to claim 1, characterised in that two lateral bending arms (42, 43) folding up closely next to the long sides act on the short, opening sides of the lid (3) and lower part (1), and their shanks (42a, 42b; 43a, 43b) are connected by a pneumatic spring (45) covering the hinge joint (44) in each case.

4. Roof case according to claim 3, characterised in that the pneumatic spring (45), extending substantially parallel to a shank, preferably to the shank (42b, 43b) attached to the lower part (3), acts on the other shank (42a, 43a), close to the hinge joint (44).

5. Roof case according to claim 1, characterised in that the pneumatic spring is fitted into a shank formed as a hollow shank and acts on the corresponding shank via a Bowden control passing through the inside of the hinge joint.

6. Roof case according to one of claims 3 to 5, characterised in that the shanks of the bending arms (42, 43) are drivingly connected together by rotatably mounted connecting struts (46) extending parallel to the edges of the short sides.

7. Roof case according to claim 6, characterised in that the shanks (42a, 43a; 42b, 43b) and their connecting struts (46) are each formed as U-shaped bent tube parts.

8. Roof case according to claims 1 to 7, characterised in that the hinge parts are fixed to a reinforcing inserts (41) covering a large part of the coupling short sides (2).

9. Roof case according to one of claims 1 to 8, characterised in that the lower part has an L-shaped edge flange (48) bent inwards, which has sealing elements (50) for the lid (3), which rests evenly and extends with its side faces flush with those of the lower part (1).

10. Roof case according to claim 9, characterised in that the sealing elements comprise a sealing hose (50) pinched between the lid edge and the upward-pointing shank (48b) of the edge flange (48) of the lower part (1).

11. Roof case according to claim 10, characterised in that the sealing hose is made of neoprene.

12. Roof case according to claim 10 or 11, characterised in that the sealing hose (50) is vulcanised on.

13. Roof case according to one of claims 9 to 14, characterised by U-shaped border strips (52, 51) mounted on the lid edge and the upward-pointing shank (48b) of the edge flange (48).

14. Roof case according to one of claims 9 to 13, characterised in that below the long edge flanges (48), reinforcing profiles (49) supporting the closing bars (6, 7) are provided.

15. Roof case according to one of claims 1 to 8, 13, 14, characterised in that the lower part has a C-shaped, inward-angled edge flange (48) with a substantially horizontal, free, shortened, shank section bent back outwards and integrally formed on the upward-pointing middle shank, the lid (3) resting flat on the horizontal lower shank with its side walls flush with the side walls of the lower part.

## Revendications

1. Coffre de toit pour véhicules automobiles, comportant un couvercle (3) qui est articulé de manière pivotante, à un de ses petits côtés, à la partie inférieure (1) en forme de coque, qui présente également une forme de coque, et qui, dans sa position de fermeture, peut être verrouillé par plusieurs verrous de fermeture (23) agencées à une barre de fermeture (6, 7) susceptible de coulisser longitudinalement, et s'engageant dans des pièces de fermeture conjuguées fixes en position, le couvercle (3) pouvant être relié à la partie inférieure (1) aux deux côtés longitudinaux, par plusieurs verrous (23) espacés entre-eux, et les barres de fermeture (6, 7), aux deux côtés longitudinaux, étant reliées à un dispositif d'actionnement commun, par l'intermédiaire d'agencements de renvoi, caractérisé en ce que le couvercle (3) arrondi au petit côté d'articulation (2) et articulé à la partie inférieure (1) par une charnière d'articulation (40) étroite et centrale, est précontraint par rapport à la partie inférieure (1), dans la direction de l'ouverture, par des jambes de force de stabilisation venant en prise dans la zone des coins de son petit côté d'ouverture et comprenant des ressorts à gaz (45).

2. Coffre de toit selon la revendication 1, caractérisé par deux ressorts à gaz qui sont articulés aux petits côtés et qui se croisent.

3. Coffre de toit selon la revendication 1, caractérisé en ce qu'aux petits côtés d'ouverture de couvercle (3) et de partie inférieure (1), viennent en prise deux compas latéraux (42, 43) se repliant à proximité immédiate des côtés longitudinaux, et dont les branches (42a, 42b; 43a, 43b) sont reliées, pour chacun des compas, par un ressort à gaz (45) chevauchant l'articulation (44).

4. Coffre de toit selon la revendication 3, caractérisé en ce que le ressort à gaz (45) s'étendent sensiblement parallèle à l'une des branches (42b, 43b), de préférence celle articulée à la partie inférieure (1), vient en prise à l'autre branche (42a, 43a), à proximité de l'articulation (44).

5. Coffre de toit selon la revendication 1, caractérisé en ce que le ressort à gaz est intégré dans l'une des branches constituées sous la forme de branches creuses, et vient en prise à la branche conjuguée, par l'intermédiaire d'un tirant à cÉble traversant intérieurement l'articulation.

6. Coffre de toit selon l'une des revendications 3 à 5, caractérisé en ce que les branches des compas (42, 43) sont reliées l'une à l'autre pour la transmission du mouvement, au moyen d'entretoises de liaison (46) s'étendant parallèlement aux bords des petits côtés et logées tournantes.

7. Coffre de toit selon la revendication 6, caractérisé en ce que les branches (42a, 43a; 42b, 43b) et leurs entretoises de liaison (46) sont chaque fois constituées en tant que parties tubulaires cintrées en forme de "U".

8. Coffre de toit selon l'une des revendications 1 à 7, caractérisé en ce que les parties de charnière sont fixées à des inserts de renfort (41) couvrant une grande partie des petits côtés d'articulation (2).

9. Coffre de toit selon l'une des revendications 1 à 8, caractérisé en ce que la partie inférieure présente une collerette de bord (48) en forme de "L", coudée vers l'intérieur, qui porte des éléments d'étanchéité (50) pour le couvercle (3) venant y reposer bord à bord, avec ses faces latérales alignées à celles de la partie inférieure (1).

10. Coffre de toit selon la revendication 9, caractérisé en ce que les éléments d'étanchéité comprennent un tube souple d'étanchéité (50) coïnçant entre le bord du couvercle et l'aile (48b) dirigée vers le haut, de la collerette de bord (48) de la partie inférieure (1).

11. Coffre de toit selon la revendication 10, caractérisé en ce que le tube souple d'étanchéité est en "Néoprène".

12. Coffre de toit selon la revendication 10 ou 11, caractérisé en ce que le tube souple d'étanchéité (50) est rapporté par vulcanisation.

13. Coffre de toit selon l'une des revendications 9 à 12, caractérisé par des bandes de bordure (52, 51) en forme de "U" rapportées sur le bord du couvercle et sur l'aile (48b) dirigée vers le haut, de la collerette de bord (48).

14. Coffre de toit selon l'une des revendications 9 à 13, caractérisé en ce que sous les collerettes de bord (48) longitudinales, sont agencés des profilés de renfort (49) portant les barres de fermeture (6, 7).

15. Coffre de toit selon l'une des revendications 1 à 8, 13, 14, caractérisé en ce que la partie inférieure présente une collerette de bord (48) en forme de "C", coudée vers l'intérieur, comportant, conformée à la branche centrale dirigée vers le haut, un troncon de branche libre, raccourci, sensiblement horizontal et recourbé vers l'extérieur, sur la branche horizontale inférieure de laquelle repose bord à bord le couvercle (3), avec des parois latérales alignées sur les parois latérales de la partie inférieure.
